# EUROPÄISCHE PATENTANMELDUNG

(11) **EP 1 484 030 A2**
(43) Veröffentlichungstag der Anmeldung: **08.12.2004**
(21) Anmeldenummer: 04021649.1
(22) Anmeldetag: 14.01.1999
(51) Int. Cl.: A61C 13/00, A61C 5/10

(54) **Verfahren zur Herstellung vollkeramischer Inlays, Kronen, Brücken, Teilbrücken, Gerüste für Implantate oder Superstrukturen in der Zahntechnik**

(30) Priorität: 16.01.1998 DE 19801534; 16.01.1998 DE 19801532; 16.01.1998 DE 19801530; 23.03.1998 DE 19812664; 15.04.1998 DE 19816546; 09.09.1998 DE 19841075; 16.11.1998 DE 19852740
(62) Teilanmeldung aus: 99906061.9
(71) Anmelder: Wolz, Stefan, 55566 Bad Sobernheim (DE)
(72) Erfinder: Wolz, Stefan, 55566 Bad Sobernheim (DE)
(74) Vertreter: Wagner, Jutta, Dr.

(57) **Zusammenfassung**

Die vorliegende Erfindung betrifft ein Verfahren zur Herstellung von vollkeramischen Inlays, Kronen, Brücken, Teilbrücken, Gerüste für Implantate oder Superstrukturen in der Zahntechnik durch Herstellung eines Gerüstes aus Spinell, Alumina, Zirconia oder ähnlichen Materialien, wobei der Stumpf eines Arbeitsmodells mit einem Trennmittel überzogen wird, das bei Temperaturen über 45 °C flüssig ist und das bei Raumtemperatur eine lippenstiftartige Konsistenz aufweist, das aufgebrachte Trennmittel mit einem Schlicker versehen wird und nach der Trennung vom Arbeitsmodell das Material gebrannt wird, wobei nach dem Brennen der resultierende Rohling mit Glas infiltriert wird.

## Beschreibung

Aus der WO 97/35531 ist ein Verfahren zur Herstellung eines Gerüstes für Inlays, Kronen und Brücken in der Zahntechnik bekannt. Bei diesem Verfahren werden die Gerüste, z.B. aus Alumina, hergestellt, indem auf den Stumpf eines Arbeitsmodells eine Folie aufgezogen wird, die aufgezogene Folie mit einem Schlicker aus dem entsprechenden Material, z.B. Alumina, versehen wird, dann die Folie vom Arbeitsmodell entnommen und mit dem darauf befindlichen Schlicker gebrannt wird. Beim Brennen der Keramikmasse verbrennt die Schrumpffolie und das Gerüst, z.B. in Form eines Käppchens, wird erhalten.

Danach erfolgt üblicherweise die Infiltrierung des Käppchens mit einer Glasmasse. Auf dem so hergestellten Käppchen erfolgt anschließend der übliche Aufbau der Verblendkeramik.

Der nach diesem Verfahren hergestellte Zahnersatz ist absolut metallfrei und somit biokompatibel und erreicht die Festigkeitswerte von Metallverbundkeramiken. Wegen der Einfachheit der Herstellung und der geringen Materialkosten kann für breite Bevölkerungsteile daher ein hochwertiger Zahnersatz zur Verfügung gestellt werden.

Obschon mit diesem Verfahren eine gegenüber dem aus der EP-A-02241384 bekannten Verfahren eine Arbeitsersparnis in der Größenordnung von 70-80% verbunden ist, ist es erfindungsgemäß gelungen, jeden einzelnen Arbeitsabschnitt nochmals zu verkürzen, womit auch eine qualitative Verbesserung erzielt wird, die im einzelnen nachfolgend näher erläutert wird.

Anhand der Zeichnungen werden die erfindungsgemäßen Schritte erklärt, wie sie in den Patentansprüchen beansprucht werden.

Es zeigen:
- Fig. 1: eine Vorrichtung zur Auftragung eines Schlickers auf eine aufgezogene Folie;
- Fig.2: eine CNC-Maschine, mit der neben dem Schlicker auch die Verblendkeramik aufgetragen werden kann;
- Fig. 3: eine Vorrichtung zum schnellen und faltenfreiem Aufziehen einer Folie auf einen Einzelstumpf;
- Fig. 4: eine Vorrichtung zum Auftragen von Schlicker oder anderen Keramikmassen im Querschnitt und Draufsicht;
- Fig. 5: eine Unterlage für Gerüste während des Infiltriervorgangs;
- Fig. 6: eine Vorrichtung zum Infiltrieren der vorgesinterten Gerüste mit Glas.

Bei den bekannten Verfahren erfolgte bisher der Auftrag des Schlickers mit einem Pinsel. Dies hatte zur Folge, dass durch Abtropfen des Schlickers von der Folie Materialverluste entstehen. Bevor der Schlicker gebrannt wird, muss er ferner auf der Folie leicht antrocknen. Bisher wurde dies durch eine entsprechende Verweilzeit an der Luft sichergestellt.

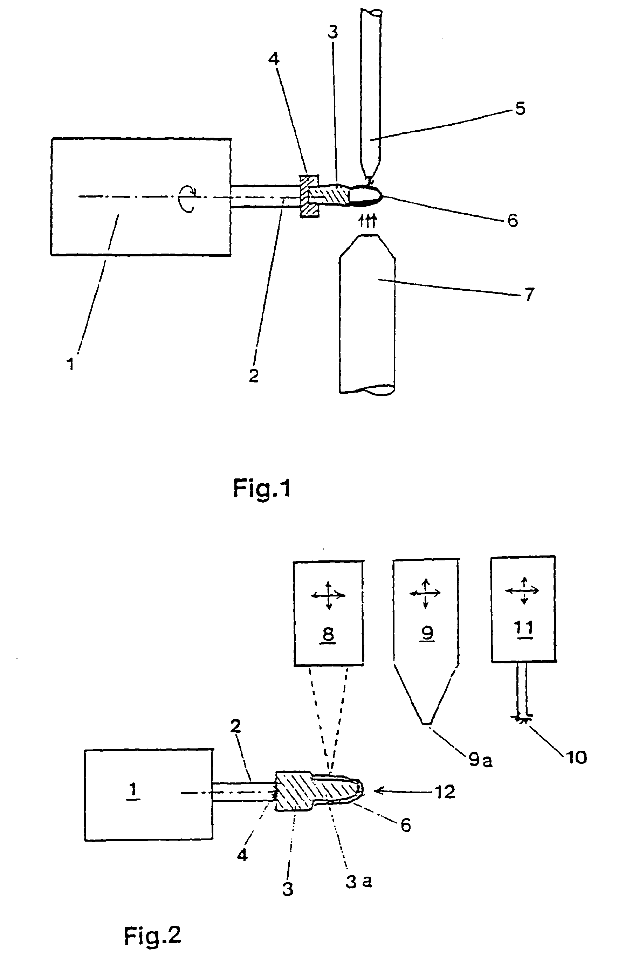

Es ist daher ein Aspekt der Erfindung, das bekannte Verfahren ohne Materialverlust zu beschleunigen, was im folgenden anhand der Figur 1 näher erläutert wird.

Der Motor 1 treibt eine Welle 2 an und ist bis auf eine Drehzahl von etwa einer Umdrehung pro Minute herab regulierbar. An der Spitze der Welle 2 ist der Stumpf 3, üblicherweise ein Gipsstumpf des Arbeitsmodells, mit einem Klebewachs 4 befestigt. Beim Hineinstecken des Stumpfes 3 in das Klebewachs 4 ist darauf zu achten, dass der Stumpf möglichst gut zentriert in Bezug auf die Drehachse der Welle angebracht ist, was das Auftragen des Schlickers erleichtert.

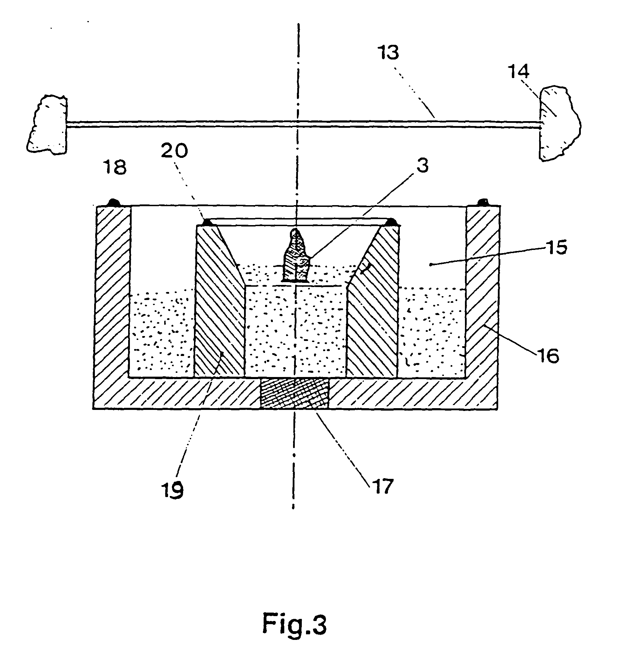

Auf die Präparation des Stumpfes 3 ist eine Folie 6 aufgeschrumpft. Damit ein faltenfreies Aufschrumpfen erzielt wird, ist es zweckmäßig, die Folie so aufzuschrumpfen, wie es später anhand der Figur 3 erläutert wird.

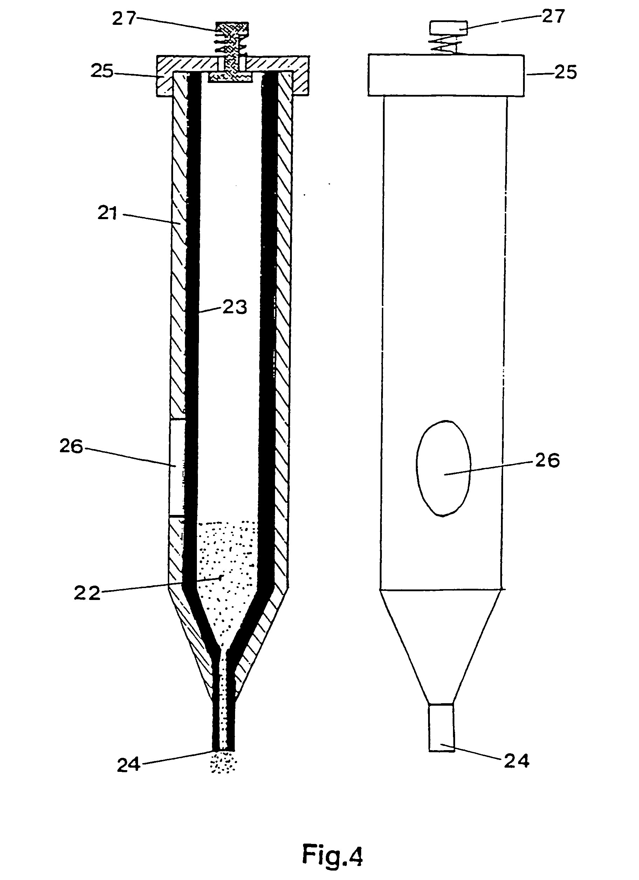

Mit Hilfe des Werkzeugs 5, beispielsweise eines Pinsels, wird der Schlicker auf die Folie 6 aufgetragen. Von besonderem Vorteil ist es, wenn eine Auftragsvorrichtung benutzt wird, die in Figur 4 gezeigt ist.

Während und/oder nach dem Auftragen des Schlickers wird der Schlicker mit einem Gas getrocknet, das über Umgebungstemperatur erwärmt ist. Hierzu wird zweckmäßigerweise ein Fön 7 benutzt, dessen Luftaustrittstemperatur regelbar ist. Während des Schlickerauftrags hat sich eine Lufttemperatur von 25 °C bis maximal 40 °C bewährt.

Das Anblasen des Schlickers mit erwärmter Luft beschleunigt den Trocknungsvorgang und ermöglicht eine gleichmäßige Trocknung der Schlickermasse, was sich positiv auf das Gefüge des gebrannten Keramikmaterials auswirkt.

Nachdem der Schlicker angetrocknet ist, muss die Folie 6 vom Stumpf 3 entfernt werden. Hierzu wird die Föntemperatur auf 80-120 °C gesteigert, was zum Schmelzen einer Trennschicht führt, die sich zwischen der Folie 6 und der Präparation des Stumpfes 3 befindet. Ein leichtes Abziehen der Folie ist somit gewährleistet.

Die Folie 6 mit dem darauf befindlichen Schlicker wird anschließend gebrannt, wobei das Plastikmaterial der Folie rückstandsfrei verbrennt. Nach der sogenannten Infiltrierung des gebrannten Käppchens und der üblichen Bearbeitung kann der Aufbau der Verblendkeramik erfolgen.

Aus vorstehenden Ausführungen ist auch ersichtlich, dass sich dieses Verfahren ohne Schwierigkeit in das automatisierte Verfahren gemäss Figur 2 integrieren lässt, das nachfolgend beschrieben wird.

In Figur 2 zeigt 1 den Motor einer CNC-Fräsmaschine, der eine Welle 2 in Drehung versetzt. Am Ende der Welle ist ein Sägestumpf 3 eines Arbeitsmodelles befestigt, der eine Präparation 3a aufweist, die formmäßig mit dem Zahnstumpf eines Patienten oder einem Implantat übereinstimmt. Der Sägestumpf 3 wird zweckmäßigerweise mit einem Klebewachs 4 an der Welle 2 befestigt, wobei eine gewisse Formschlüssigkeit zwischen dem Ende der Welle 2 und dem Sägestumpf 3 hilfreich sein kann. Auf die Präparation ist eine Schrumpffolie 6 faltenfrei aufgeschrumpft. Anstelle der Folie ist auch der Auftrag eines lippenstiftartigen Trennmittels möglich. Die Erfindung wird aber einfachheitshalber im nachfolgenden nur gemäss Folienverfahren beschrieben.

Als erster Schritt im CNC-Verfahren wird zunächst die Oberflächenkontur der über dem Objekt aufgezogenen Folie abgetastet und numerisch gespeichert. Wie bei modernen CNC-Maschinen üblich geschieht dies mittels eines Lasers 8. Eine mechanische Abtastung ist jedoch auch möglich.

Anschließend erfolgt die Auftragung eines Schlickers mittels einer pipettenähnlichen Auftragsvorrichtung 9, die näher in Figur 4 beschrieben ist. Die Austrittsspitze 9a wird hierbei im geringen Abstand über die sich drehende Folie 6 geführt, wobei der Abstand der Austrittsspitze 9a zur Oberfläche der Folie durch die vorher eingespeicherten Werte des Oberflächenprofils numerisch gesteuert wird. Die Drehgeschwindigkeit der Welle 2 und die Austrittsgeschwindigkeit des Schlickers an der Spitze 9a sind hierbei so aufeinanderabgestimmt, dass ein kontinuierlicher Materialfluss von der Spitze 9a zu Oberfläche der Folie gewährleistet ist. Durch diese Maßnahmen besitzt das Käppchen bereits in diesem Verfahrensstand annähernd die gewünschte Wandstärke.

Als nächster Verfahrensschritt erfolgt das Abfräsen des überschüssigen Materials durch den numerisch gesteuerten Fräskopf 10 mit Fräse 11. Das Ausfräsen einer Kontur in der Zahntechnik mittels einer CNC-Fräsmaschine ist zwar an sich nichts Neues, jedoch geschieht dies grundsätzlich beim Stand der Technik durch Ausfräsen aus dem Vollen. Bei der vorliegenden Erfindung ist jedoch durch den gesteuerten Schlickerauftrag das abzufräsende Volumen bereits auf ein Minimum reduziert, was um eine Größenordnung schnelleres Arbeiten ermöglicht.

Nach kurzem Antrocknen des Schlickers wird das auf der Präparation 3a befindliche Käppchen 12 von dieser abgezogen, gesintert und in der bekannten Weise infiltriert, damit die notwendige Festigkeit erzielt wird.

Die vorstehend beschriebene erfindungsgemäße Anordnung, bestehend aus einer an sich bekannten CNC-Fräsmaschine, erfindungsgemäß kombiniert mit einer pipettenähnlichen Dosiervorrichtung, lässt sich ferner für die Herstellung einer kompletten Keramikkrone verwenden. Hierzu wird das fertige Käppchen nach dem Infiltrieren wieder auf die Präparation 3a aufgesetzt. Der vorher durch die Schrumpffolie eingenommene Raum lässt sich durch Wachs oder ein ähnliches Material ersetzen, sodass ein sicherer Halt gewährleistet ist.

Das Keramikmaterial wird - wie der Schlicker vorher auf die Folie - auf das Käppchen aufgetragen, wobei die Steuerung der Auftragspipette durch digital gespeicherte Werte erfolgt, die der gewünschten anatomischen Form der Krone entsprechen. Hierzu wird vorher auf die Präparation 3a ein Modell des Zahnes, beispielsweise aus Wachs, aufgesteckt, dessen Oberfläche in der bereits beschriebenen Weise gespeichert wird. Bei diesem Materialauftrag ist selbstverständlich der Schrumpf der Keramik beim Brennen einzukalkulieren.

Das Auftragen des Keramikmaterials kann aus mehreren Auftragspipetten erfolgen, die Material unterschiedlicher Farbtönungen enthalten. Durch entsprechende Schichtung und Steuerung lässt sich so der gewünschte Farbton der Krone einstellen. Diese Steuerung kann über die Einstellung des Auspressdruckes in der Pipette oder über den Kolbenvorschub erfolgen, sowie durch den Rechner in 3D-Graphik erstellt werden.

Wichtig bei dem erfindungsgemäßen Verfahren ist es ferner, dass die Folie schnell und faltenfrei aufgezogen werden kann.

Aus Figur 3 ist der Grundaufbau einer Tiefziehvorrichtungen erkennbar, die vorstehende Anforderungen erfüllt. Eine Folie 13 wird durch eine Einspannvorrichtung 14 gehalten. Da die Folie 13 nach dem Erhitzen aufgrund ihrer geringen Masse schnell die Wärme verliert, sind üblicherweise (nicht gezeigte) Wärmespeicherelemente vorgesehen. In einem Granulataufnahmeraum 15, der durch eine Wandung 16 gebildet wird, befindet sich des Granulat zum Halten des Objektes, hier des Einzelstumpfes 3. Im Boden des Aufnahmeraumes 15 ist ein Filter 17 vorgesehen, das verhindert, dass das Granulat durch das Vakuum unterhalb des Filters abgesaugt wird.

Die erhitze Folie wird auf die Dichtlippe 18 aufgelegt und tiefgezogen. Hierbei ummantelt sie den Einzelstumpf 3. Bis hier besteht zwischen der Erfindung und dem Stand der Technik kein Unterschied.

Für die gewünschte Präzision ist eine solche Vorrichtung aber noch nicht geeignet. Zum einen wird bei dem vorstehend erwähnten Verfahren eine sehr dünne Folie benötigt. Ihre Stärken betragen 0.1 mm oder dünner für die Beschichtung von Einzelstümpfen für die Schlickertechnik und höchstens 0.6 mm für die Teleskop-Kronentechnik. Solche Folien zerreißen unweigerlich in den herkömmlichen Tiefziehvorrichtungen.

Durch den Einsatz des erfindungsgemäßen Trichters 19, der mit einer Dichtlippe 20 am oberen Rand versehen sein kann, wird in überraschender Weise das Reißen der Folie verhindert und ein faltenfreier Überzug auf dem Einzelstumpf erzielt, da der Trichter beim Tiefziehen die Folie definiert auf den Stumpf leitet, wodurch eine gleichmäßige Materialstärke auf dem Stumpf erreicht wird.

Ein weiteres Problem bei dünnen Folien kann durch das Granulat entstehen, das üblicherweise aus Blei in zylindrischer Form mit einem Durchmesser von etwa 0.5 mm besteht.

Es wurde nun gefunden, dass sich Messingkügelchen mit einem Durchmesser von 0.2 bis 0.5 mm, vorzugsweise 0.3 mm, besonders eignen, da sie die Folie nicht perforieren.

Nach dem Aufschrumpfen der Folie ist es vorteilhaft, die Folie in einem begrenzten Bereich an der Spitze des Stumpfes zu entfernen. Hierdurch liegt das Käppchen im fertigen Zustand des Zahnes direkt auf dem Zahnstumpf auf, wodurch Spannungen im Zahnaufbau reduziert werden.

Der Raum, der bei diesem Verfahren von der Folie ausgefüllt wird, hat die Funktion eines Platzhalters, der bei Kronen und in der Brückentechnik erwünscht ist, da diese den Abfluss des Zementierungsmaterials gewährleistet.

Bei der Herstellung von Inlays, Teilkronen und Gerüsten für Implantate und/oder Suprastrukturen ist eine solche Platzhalterfunktion nicht nötig, sondern sogar unerwünscht, da diese zahnprothetischen Teile unmittelbar mit ihrem Partnerteil kontaktieren sollen. Man spricht hier daher von einer adhäsiven Zementierung. Insbesondere aber in der Implantattechnik ist kein Spiel erwünscht, da dies Ursache für das Herausfallen der Implantate sein kann, da üblicherweise die Kronen mit dem Implantat verschraubt werden und das Auftreten eines Biegemomentes zum Bruch der Krone führt.

Bei der Entwicklung der Erfindung war es zunächst ein Ziel. die Folie durch ein äußerst dünnes Material zu ersetzen, das die unerwünschte Platzhaltereigenschaft nicht mehr aufweist. Der Erfinder hat nun in äußerst überraschender Weise gefunden, dass sich handelsübliche Lippenpflegemittel wie Labello (eingetragenes Warenzeichen der Fa. Beiersdorf AG) bestens eignet. Hierzu muss das Material warm, also über 45 °C, auf den Stumpf aufgetragen werden, da sich so ein hauchdünner Film bilden kann. Wegen der schlechten Sichtbarkeit des Films aufgrund seiner geringen Stärke und/oder zur Verbesserung der Reflexion des Laserstrahles empfiehlt sich das Anfärben des Mittels.

Nach dem Abkühlen ist der Stumpf dann mit einem Film überzogen, der beim Auftragen des Schlickers nicht zerstört wird und an dem der Schlicker gut haftet.

Nach Entnahme vom Arbeitsmodell wird der Rohling gesintert. Hierbei verflüssigt sich das erfindungsgemäße Trennmittel wieder und wird zunächst von der Keramik wie von einem Schwamm aufgesogen und anschließend bei der hohen Sintertemperatur rückstandslos verbrannt. Hierdurch wird die gewünschte Präzision erzielt.

Die solchermaßen hergestellte Restauration ist daher für die adhäsive Zementierung und insbesonders für die Implantattechnik bestens geeignet.

Bei der Herstellung von künstlichen Zähnen oder dgl. wird nach wie vor die Keramikmasse in Form eines Schlickers mit dem Pinsel per Hand auf das Objekt aufgetragen. Diese Technik unterscheidet sich fast in nichts von der Technik eines Malers, der von einer Farbpalette mit dem Pinsel Ölfarbe auf ein Bild aufträgt, nur dass der Zahntechniker normalerweise eine Glasplatte benutzt.

Da Schlicker aus einer Mischung aus Keramikpulver und üblicherweise Wasser besteht, verdunstet das Wasser aus der Mischung heraus, wodurch der Schlicker unbrauchbar, da zu zäh, wird. Insbesondere bei Alumina-Schlickern ist das Wasserverhältnis eine sehr kritische Größe. Bei nicht-optimalem Wasserverhältnis ergibt sich beim Brennen ein schlechtes Gefüge und damit eine geringe Bruchfestigkeit. Da dies dem Zahntechniker bekannt ist, bringt er an den auf der Arbeitsglasplatte befindlichen Schlicker Feuchtigkeitsspeicher an, z.B. feuchte Papierkügelchen usw. Der Phantasie sind in diesem Punkt keine Grenzen gesetzt.

Andererseits besteht aber auch die Gefahr, dass durch das erforderliche Pinselauswaschen zuviel Wasser in den Schlicker eingetragen wird. Auch dies hat im Endeffekt die gleichen negativen Folgen.

Die in Figur 4 gezeigte Auftragsvorrichtung gewährleistet ein konstantes Flüssigkeit/Keramikpulver-Verhältnis beim Arbeiten.

Die Auftragsvorrichtung besteht aus einem Außenrohr 21, das bei Gebrauch wie ein Pinsel in der Hand des Zahntechnikers liegt. In das Außenrohr 21 ist ein elastisches Innenrohr 23, vorzugsweise aus Silikonkautschuk, eingelegt, das mit der Keramikmasse gefüllt ist. Außenrohr 21 und Innenrohr 23 verjüngen sich zu einer Auftragsspitze 24. Da der Innenraum der Auftragsvorrichtung durch eine Kappe 25 verschlossen ist, kann durch Ausübung eines Fingerdruckes über die Fingerdrucköffnung 26 ein Überdruck erzielt werden, der den Schlicker an der Auftragsspitze 24 austreten lässt. Um einen Unterdruck abbauen zu können, der beim Zurückgehen des eingedrückten Innenrohres 23 in die Normallage entsteht, kann ein Belüftungsventil 27 vorgesehen werden.

Zur Anpassung an die jeweiligen Arbeitsbedingungen kann die Auftragsspitze füllfederhaltig geschlitzt oder pinselartig ausgebildet sein. Die Form der Spitze hängt von der Viskosität des Schlickers ab.

Da das elastische Innenrohr 23 in das Außenrohr 21 eingeschoben werden kann, ist es möglich, erfindungsgemäß den Schlicker beim Hersteller des Keramikpulvers anmischen und in das Innenrohr 23 einfüllen zu lassen, da beim Mischen im Zahnlabor falsche Mischungsverhältnisse leicht möglich sind. Um einen gebrauchsfähigen Schlicker zu erhalten, muss das Innenrohr nur an beiden Enden dann aufgeschnitten oder anderweitig geöffnet werden.

Diese Konstruktion hat gegenüber anderen denkbaren Vorrichtungen den Vorteil, dass keinerlei mechanische Teile, wie Kolben, benötigt werden.

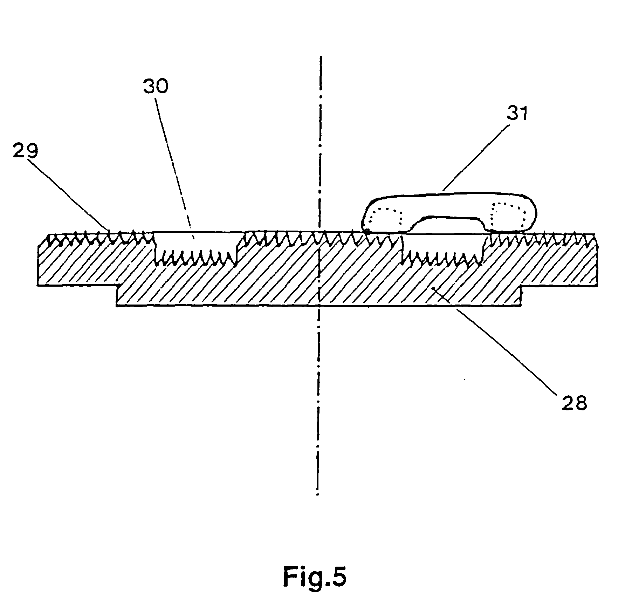

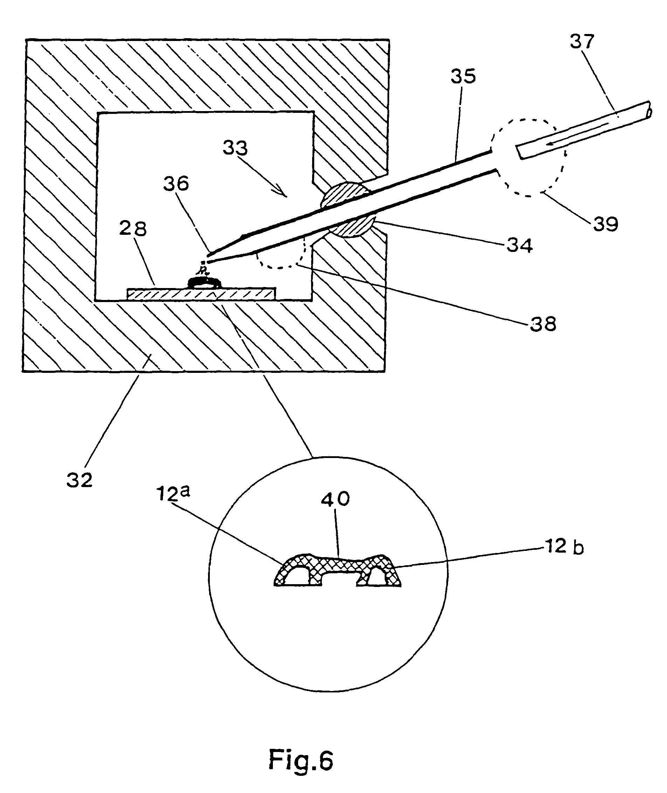

Eine weitere Beschleunigung des Verfahrens wird mit den Vorrichtungen gemäss den Figuren 5 und 6 erzielt.

Bisher wurde während der Infiltrierung das Gerüst auf eine Platinfolie aufgelegt.

Platin wird von geschmolzenen Glas nicht benetzt. Da grundsätzlich mit einem Überschuss an Infiltrationspulver gearbeitet werden muss, fließt das überschüssige Glas an der Oberfläche des Gerüstes herab auf die Platinfolie und bildet dort am Gerüstrand einen Glasfuß, der in mühsamer Kleinarbeit durch Schleifen und/oder Sandstrahlen entfernt werden muss. Unter Umständen muss durch nochmaliges Erhitzen ein Teil des Überschussglases entfernt werden. Neben dem beachtlichen Arbeitsaufwand besteht noch die Gefahr, dass das Gerüst bei dieser Arbeit beschädigt wird.

Mit der Vorrichtung nach Figur 5 wird eine schnelle und sichere Entfernung des Überschussglases gewährleistet.

Figur 5 zeigt eine Unterlage 28, die im vorliegenden Fall rotationssymmetrisch ausgebildet ist, was deren Herstellung erleichtert. Die Oberfläche der Unterlage 28 hat eine profilierte Oberflächenstruktur in Form einer Zick-Zack-Profilierung 29. Jede andere Profilierung ist mehr oder weniger gleich gut geeignet. Wichtig ist nur, dass die erhobenen Bereiche nicht zu groß im Vergleich zum Gerüst sind.

Die Unterlage 28 weist ferner eine Nut 30 auf, die von einem aufgelegten Brückengliedgerüst 31 überbrückt wird.

Die Unterlage 28 besteht aus einem porösen Material, das durch Glas benetzt wird. In diesem Punkt wird also das Gegenteil vom Stand der Technik gefordert, der von nicht benetzbaren Platinfolien ausgeht. Als Material haben sich besonders Einbettmassen bewährt, die in der Zahntechnik üblich sind. Prinzipiell ist aber jedes Keramikmaterial durch Glas benetzbar und daher geeignet.

Während des Erhitzungsvorganges fließt das Überschussglas an der Brücke 31 herab und tropft einerseits in die Nut 30 und wird andererseits von der porösen Oberfläche aufgesogen. Gerade für Brücken mit großer Materialmasse im Mittelteil ist die Möglichkeit des Abtropfens von Vorteil, da das abgetropfte Glas keine Verbindung mit der Brücke mehr aufweist. Hierdurch minimiert sich die Menge des später zu entfernenden Glases.

Da beim Eindringen des flüssigen Glases in das poröse Material der Unterlage sich ein Mischmaterial aus Glas und Keramik bildet, weist das noch am Gerüst hängende Überschussglas schwache Festigkeitswerte im Vergleich zum reinen Glas auf. Es kann also leicht und schnell mechanisch entfernt werden.

Auch beim Abheben von der Unterlage ist keine Beschädigung des Gerüstes möglich, da die in der Figur gezeigten Zacken einfach von der Unterlage wegbrechen, ohne dass eine sonderlich starke Kraft erforderlich wäre, wenn die Unterlage aus einer Einbettmasse oder dgl. besteht.

In Figur 6 ist ein üblicher Keramikbrennofen 32 schematisch gezeigt, der in Dentallabors Verwendung findet. Durch die Wand des Ofens 32 ist eine von außen bewegliche, pipettenähnliche Auftragsvorrichtung 33 hindurchgeführt, die zweckmäßigerweise in einem Kugelgelenk 34 gelagert ist. Die Auftragsvorrichtung 33 besteht im gezeigten Fall aus einem Platinrohr 35 mit einer Spitze 36. Da das Rohr 35 innerhalb des Kugelgelenkes 34 verschieblich gelagert ist, ist die Auftragsspitze 36 innerhalb des Ofens 32 dreidimensional beweglich.

Im folgenden wird die erfindungsgemäße Herstellung eines Gerüstes für eine Brücke beschrieben.

Nach dem zuvor beschriebenen Folienverfahren werden zunächst zwei Käppchen 12a und 12b aus einem Keramikschlicker hergestellt, die mit einem Brückenzwischenglied 40 aus dem gleichen Material, z.B. Alumina, verbunden werden. Das Brückenzwischenglied kann händisch aber auch maschinell hergestellt werden, indem die Lage der beiden Käppchen 12a und 12b auf dem Arbeitsmodell vermessen wird und es dann aus einem vorgesinterten Rohling computergesteuert herausgefräst wird. Das Gerüst wird anschließend gesintert.

Würde das so hergestellte Brückengerüst nach dem Stand der Technik glasinfiltriert, ließe man zu diesem Zeitpunkt a) den Ofen abkühlen, b) das Brückengerüst entnehmen, c) das Infiltrierglas in Form von Pulver aufbringen und d) das bepulverte Gerüst zum Aufschmelzen des Glases erneut erhitzen.

Als Infiltrierglas verwendet man üblicherweise eine Glasfritte, die aus der EP-A-0030851 schon bekannt ist, oder ein Glas mit hohem Lanthangehalt.

Dass diese Schritte mit Energie- und Zeitverlusten verbunden sind, wurde erfindungsbegründend erkannt.

Der erste Schritt liegt daher darin, dass das Gerüst im Ofen ohne Abkühlung verbleibt, am besten auf einer Unterlage 28 gemäß Figur 5.

Während und/oder unmittelbar nach dem Sintern wird das Infiltrierglas im Ofen 32 selbst aufgeschmolzen, indem in das Rohr 35 ein Glasstab 37 eingeführt wird, der zuerst an der Spitze 36 flüssig wird. Durch entsprechendes Nachschieben des Stabes 37 ist eine ausreichende Dosiermöglichkeit gegeben, bis das Gerüst voll mit Infiltrierglas überzogen ist. Nach ca. 4 Stunden bei ca. 1100 °C ist der Infiltriervorgang abgeschlossen. Der Vorgang kann durch ein nicht gezeigtes feuerfestes Glasfenster beobachtet werden.

Die Verwendung eines fertigen Glasstabes anstelle von Glaspulver hat den Vorteil, dass auf die aufwändige Herstellung von Glaspulver verzichtet werden kann.

Das Aufschmelzen von Pulver in einem Platinrohr ist nämlich nicht ganz problemlos, da flüssiges Glas Platin nicht benetzt und folglich kein Kapillareffekt im Rohr vorliegt. Das Glas würde daher einfach aus dem Rohr ausfließen, wenn keine gesonderten Vorkehrungen getroffen würden. Eine solche Vorkehrung wäre die angedeutete Schmelzkammer 38, in der in waagerechter Lage des Rohres das Glaspulver geschmolzen werden kann, ohne dass Glas ausfließt. In geneigter Lage des Rohres ließe sich dann mittels des angedeuteten Blasebalgs 39 das Glas dosieren.

Zu beachten ist ferner noch, dass Platin und andere geeignete Metalle eine hohe Wärmeleitfähigkeit aufweisen, die nicht gezeigte Isoliermaßnahmen erforderlich machen, damit das Rohr 35 handhabbar ist.

Nach Beendigung der Infiltrierung und den üblichen mechanischen Nacharbeiten wird in einem weiteren Sintervorgang die Verblendkeramik auf das Brückengerüst aufgebracht.

Mit der vorliegenden Erfindung ist somit ein weiterer Durchbruch zur Herstellung vollkeramischer Restaurationen gelungen, die einerseits qualitativ allen Anforderungen an einen Zahnersatz gerecht werden, andererseits wegen der Effizienz des Verfahrens äußerst kostengünstig sind. Insofern erfüllt die Erfindung ein soziales Bedürfnis.

Folgende Verfahren und Vorrichtungen stellen besonders bevorzugte Ausführungsformen dar:
1. Verfahren zur Herstellung von vollkeramischen Inlays, Kronen, Brücken, Teilbrücken-, Gerüste für Implantate oder Superstrukturen in der Zahntechnik durch Herstellung eines Gerüstes aus Spinell, Alumina, Zirconia oder ähnlichen Materialien, wobei auf den Stumpf eines Arbeitsmodells eine Folie aufgezogen wird, die aufgezogene Folie mit einem Schlicker versehen wird und der auf der vom Arbeitsmodell entnommenen Folie befindlicher Schlicker gebrannt wird, oder wobei der Stumpf eines Arbeitsmodells mit einem Trennmittel überzogen wird, das bei Temperaturen über 45 °C flüssig ist und das bei Raumtemperatur eine lippenstiftartige Konsistenz aufweist, das aufgebrachte Trennmittel mit einem Schlicker versehen wird und nach der Trennung vom Arbeitsmodell das Material gebrannt wird, wobei in beiden Fällen während des Schlickerauftrags der Stumpf an einer sich drehenden Welle fixiert ist und nach dem Brennen der resultierende Rohling, insbesondere in Form eines Käppchens, mit Glas infiltriert wird.
2. Verfahren nach Anspruch 1, dadurch gekennzeichnet, dass der Stumpf an der Spitze der Drehwelle einer CNC-Fräsmaschine befestigt wird, dass durch Abtasten des Oberflächenprofils der Präparation ,insbesondere mittels Laserstrahlen, dieses Profil gespeichert wird, dass über die gespeicherten Daten eine Dosiervorrichtung gesteuert wird, die den Schlicker gleichmäßig auf die Folie aufbringt, und dass anschließend das aufgebrachte Schlickermaterial mittels der gespeicherten Daten auf eine vorgegebene Stärke abgefräst wird.
3. Verfahren zum Tiefziehen von Folien auf Einzelstümpfe, insbesondere zur Verwendung in dem Verfahren nach Anspruch 1, wobei der Stumpf in einem Granulatbett gehalten wird und durch Anlegen eines Vakuums unterhalb des Stumpfes eine erhitzte Folie auf den Stumpf aufgezogen wird und der Stumpf innerhalb eines Granulataufnahmeraums von einem Trichter umgeben wird, der beim Tiefziehen die Folie auf den Stumpf leitet.
4.Verfahren nach Anspruch I oder 2, dadurch gekennzeichnet, dass der Stumpf an der Drehwelle mit einem Klebewachs fixiert wird.
5. Verfahren zur Herstellung von Kronen nach einem der Ansprüche 1-4, dadurch gekennzeichnet, dass das hergestellte Käppchen auf dem an der Drehwelle befindlichem Stumpf befestigt wird, dass auf das Käppchen eine Form aufgesteckt wird, die der gewünschten anatomischen Form der Krone entspricht, dass diese Form abgetastet und gespeichert wird, dass nach Entfernung dieser Form ein Keramikmaterial in der gewünschten Stärke CNC-gesteuert aufgetragen wird und Käppchen plus Keramikmaterial zur fertigen Krone gebrannt wird.
6. Verfahren nach Anspruch 5, dadurch gekennzeichnet, dass das Käppchen mittels Klebewachs auf dem Sägestumpf befestigt wird.
7. Verfahren nach einem der Ansprüche 1-4, dadurch gekennzeichnet, dass der Schlicker während und/oder nach dem Schlickerauftrag mit einem über Umgebungstemperatur erwärmten Gas getrocknet wird.
8. Verfahren nach Anspruch 7, dadurch gekennzeichnet, dass das Gas Luft ist.
9. Verfahren nach einem der Ansprüche 7 oder 8, dass das Gas auf 25 bis 40 °C erwärmt wird.
10. Verfahren nach einem der Ansprüche 1-9, dadurch gekennzeichnet, dass zwischen der Folie und der Präparation des Stumpfes eine Trennschicht aufgebracht wird.
11. Verfahren nach Anspruch 10, dadurch gekennzeichnet, dass nach dem Schlickerauftrag zum Entfernen der Folie die Gastemperatur über den Schmelzpunkt der Trennschicht angehoben wird.
12. Verfahren nach Anspruch 11, dadurch gekennzeichnet, dass die Gastemperatur auf 80 bis1200 °C gesteigert wird.
13. Verfahren nach einem der Ansprüche 1 bis 12, dadurch gekennzeichnet, dass das Trennmittel bei Temperaturen über45 °C aufgetragen wird, wobei es einen gleichmäßigen Film bildet.
14. Verfahren nach einem der Ansprüche 1 bis 13, dadurch gekennzeichnet, dass vor dem Auftragen das Trennmittel eingefärbt wird.
15. Verfahren nach einem der Ansprüche 1 bis 14, dadurch gekennzeichnet, dass handelsübliche Lippenpflegemittel verwendet werden.
16. Verfahren zum Infiltrieren von insbesondere nach den Ansprüchen 1 bis 4 und 7 bis 15 hergestellten, gesinterten Gerüsten, dadurch gekennzeichnet, dass das Gerüst während des Erhitzens auf einer porösen, durch flüssiges Glas benetzbaren Unterlage aufliegt, die das überflüssige Glas aufsaugt.
17. Verfahren zum Infiltrieren von insbesondere nach den Ansprüchen 1 bis 4 und 7 bis 16 hergestellten, gesinterten Gerüsten in einem Keramikofen, dadurch gekennzeichnet, dass ohne Entnahme des Gerüstes aus dem Keramikofen die Glasmasse während und/oder nach dem Sintern bevorzugt in einer im Keramikofen befindlichen Auftragsvorrichtung aufgeschmolzen wird und das flüssige Glas von der Auftragsvorrichtung auf das Gerüst aufgetragen wird.
18. Verfahren nach Anspruch 17, dadurch gekennzeichnet, dass die Glasmasse als Glasstab bereitgestellt wird.
19. Vorrichtung zur Durchführung des Verfahrens nach mindestens einem der Ansprüche 1 und 7 bis 15, gekennzeichnet durch einen Motor (1) mit regelbarer Drehzahl für eine Welle (2), die an ihrem Ende das Anbringen des Stumpfes eines Arbeitsmodells erlaubt, und einen Fön (7) mit einstellbarer Lufttemperatur.
20. Vorrichtung zur Durchführung des Verfahrens nach einem der Ansprüche 2 bis 15, bestehend aus einer CNC-Fräsmaschine mit einer Laserabtastung (8), wobei in der Fräsmaschine mindestens eine ebenfalls steuerbare Dosiervorrichtung (9 ) für Schlicker oder Keramikmaterial integriert ist und die Dosiervorrichtung wie die Fräse gesteuert über die Oberfläche des zu beschichtenden Objektes verfahrbar ist.
21. Vorrichtung zur Durchführung des Verfahrens nach Anspruch 16, gekennzeichnet durch eine Unterlage (28) aus einem porösen Keramikmaterial, die eine profilierte Oberflächenstruktur aufweist.
22. Vorrichtung nach Anspruch 21, dadurch gekennzeichnet, dass die Unterlage ( 28) aus einer zahntechnischen Einbettmasse besteht.
23. Vorrichtung nach Anspruch 21 oder 22, dadurch gekennzeichnet, dass die Unterlage (28) rotationssymmetrisch ist.
24. Vorrichtung nach einem der Ansprüche 21 bis 23, dadurch gekennzeichnet, dass die Unterlage eine Zick-Zack-Profilierung (29) aufweist.
25. Vorrichtung nach einem der Ansprüche21 bis 24, dadurch gekennzeichnet, dass in der Oberfläche der Unterlage (28) mindestens eine Nut (30) eingearbeitet ist.
26. Vorrichtung zur Durchführung des Verfahrens nach Anspruch 17 oder 18, gekennzeichnet durch einen Keramikofen (32), der mit einer von außen beweglichen, pipettenähnlichen Auftragsvorrichtung (33) versehen ist, die dreidimensional beweglich ist.
27. Vorrichtung nach Anspruch 26, dadurch gekennzeichnet, dass die Auftragsvorrichtung (33) in einem Kugelgelenk (34) in der Wand des Keramikofens (32) gelagert ist.
28. Vorrichtung nach einem der Ansprüche 26 oder 27, dadurch gekennzeichnet, dass die Auftragsvorrichtung (33) ein an einem Ende (36) spitz zulaufendes Rohr (35) aufweist.
29. Vorrichtung nach Anspruch 28, dadurch gekennzeichnet, dass das Rohr (35) aus Platin besteht.
30. Vorrichtung zum Auftragen eines Schlickers, insbesondere in dem Verfahren nach den Ansprüchen 1 bis 4, oder zum Auftragen eines Keramikmaterials insbesondere nach Anspruch5, gekennzeichnet durch ein Außenrohr (21), in das ein elastisches Innenrohr (23) eingelegt ist, wobei das Außenrohr (21) mit einer Fingeröffnung (26) versehen ist und das elastische Innenrohr (23) sich an einem Ende zu einer Auftragsspitze (24) verjüngt und das andere Ende zur Atmosphäre verschlossen ist.
31. Vorrichtung nach Anspruch 30, dadurch gekennzeichnet, dass das Innenrohr aus Silikonkautschuk besteht.
32. Vorrichtung nach Anspruch 30 oder 31, dadurch gekennzeichnet, dass die Auftragsspitze (24) füllfederhalterartig geschlitzt ist.
33. Vorrichtung nach Anspruch 30 bis 31, dadurch gekennzeichnet, dass die Auftragsspitze (24)pinselartig ausgebildet ist.
34. Vorrichtung nach einem der Ansprüche 30 bis 33, dadurch gekennzeichnet, dass sie mit einer Kappe (25) verschlossen ist.
35. Vorrichtung nach einem der Ansprüche 30 bis 34, dadurch gekennzeichnet, dass ein Belüftungsventil (27) für den Innenraum vorgesehen ist.
36. Vorrichtung zur Durchführung des Verfahrens nach Anspruch 3, gekennzeichnet durch einen Granulataufnahmeraum (15), in dem ein Trichter (19) angeordnet ist, dessen oberer Rand bevorzugt mit einer Dichtlippe (20) versehen ist, einer Vakuumerzeugungseinrichtung zur Erzeugung eines Vakuums unterhalb des Granulataufnahmeraumes (15) und einer Einspannvorrichtung (14) für die Folie (13).
37. Vorrichtung nach Anspruch 36, gekennzeichnet durch eine Granulatfüllung aus Messingkugeln mit einem Durchmesser von 0.2 bis0.5 mm.

### Bezugszeichenliste

- 1: Motor
- 2: Welle
- 3: Stumpf
- 3a: Präparation des Stumpfes
- 4: Klebewachs
- 5: Auftragungswerkzeug
- 6: aufgeschrumpfte Folie
- 7: Fön
- 8: Laser
- 9: Auftragsvorrichtung für Schlicker
- 9a: Austrittsspitze
- 10: Fräskopf
- 11: Fräse
- 12: Käppchen
- 13: Folie vor dem Aufschrumpfen
- 14: Einspannungsvorrichtung
- 15: Granulataufnahmeraum
- 16: Wandung
- 17: Filter
- 18: 1.Dichtlippe
- 19: Trichter
- 20: 2.Dichtlippe
- 21: Außenrohr
- 22: Keramikmasse
- 23: Innenrohr
- 24: Auftragsspitze
- 25: Kappe
- 26: Fingerdrucköffnung
- 27: Belüftungsventil
- 28: Unterlage
- 29: Profilierung
- 30: Nut
- 31: Brückengliedgerüst
- 32: Keramikofen
- 33: Auftragsvorrichtung für Infiltrierglas
- 34: Kugelgelenk
- 35: Platinrohr
- 36: Spitze
- 37: Glasstab
- 38: Schmelzkammer
- 39: Blasebalg
- 40: Brückenzwischenglied

## Patentansprüche

1. Verfahren zur Herstellung von vollkeramischen Inlays, Kronen, Brücken, Teilbrücken, Gerüste für Implantate oder Superstrukturen in der Zahntechnik durch Herstellung eines Gerüstes aus Spinell, Alumina, Zirconia oder ähnlichen Materialien, wobei der Stumpf eines Arbeitsmodells mit einem Trennmittel überzogen wird, das bei Temperaturen über 45 °C flüssig ist und das bei Raumtemperatur eine lippenstiftartige Konsistenz aufweist, das aufgebrachte Trennmittel mit einem Schlicker versehen wird und nach der Trennung vom Arbeitsmodell das Material gebrannt wird, wobei nach dem Brennen der resultierende Rohling, insbesondere in Form eines Käppchens, mit Glas infiltriert wird.

2. Verfahren nach Anspruch 1, **dadurch gekennzeichnet, dass** während des Schlickerauftrags der Stumpf an einer sich drehenden Welle fixiert ist.

3. Verfahren nach Anspruch 2, **dadurch gekennzeichnet, dass** der Stumpf an der Spitze der Drehwelle einer CNC-Fräsmaschine befestigt wird, dass durch Abtasten des Oberflächenprofils der Präparation, insbesondere mittels Laserstrahlen, dieses Profil gespeichert wird, dass über die gespeicherten Daten eine Dosiervorrichtung gesteuert wird, die den Schlicker gleichmäßig auf das Trennmittel aufbringt, und dass anschließend das aufgebrachte Schlickermaterial mittels der gespeicherten Daten auf eine vorgegebene Stärke abgefräst wird.

4. Verfahren nach Anspruch 2 oder 3, **dadurch gekennzeichnet, dass** der Stumpf an der Drehwelle mit einem Klebewachs fixiert wird.

5. Verfahren zur Herstellung von Kronen nach einem der Ansprüche 1-4, **dadurch gekennzeichnet, dass** das hergestellte Käppchen auf dem an der Drehwelle befindlichem Stumpf befestigt wird, dass auf das Käppchen eine Form aufgesteckt wird, die der gewünschten anatomischen Form der Krone entspricht, dass diese Form abgetastet und gespeichert wird, dass nach Entfernung dieser Form ein Keramikmaterial in der gewünschten Stärke CNC-gesteuert aufgetragen wird und Käppchen plus Keramikmaterial zur fertigen Krone gebrannt wird.

6. Verfahren nach einem der Ansprüche 1-4, **dadurch gekennzeichnet, dass** der Schlicker während und/oder nach dem Schlickerauftrag mit einem über Umgebungstemperatur erwärmten Gas getrocknet wird.

7. Verfahren nach Anspruch 6, **dadurch gekennzeichnet, dass** das Gas Luft ist und auf 25 bis 40 °C erwärmt wird.

8. Verfahren nach einem der Ansprüche 1 bis 7, **dadurch gekennzeichnet, dass** vor dem Auftragen das Trennmittel eingefärbt wird.

9. Verfahren nach einem der Ansprüche 1 bis 8, **dadurch gekennzeichnet, dass** handelsübliche Lippenpflegemittel verwendet werden.

10. Verfahren zum Infiltrieren von nach den Ansprüchen 1 bis 4 hergestellten gesinterten Gerüsten, **dadurch gekennzeichnet, dass** das Gerüst während des Erhitzens auf einer porösen, durch flüssiges Glas benetzbaren Unterlage aufliegt, die das überflüssige Glas aufsaugt.

11. Verfahren zum Infiltrieren von nach den Ansprüchen 1 bis 4 hergestellten, gesinterten Gerüsten in einem Keramikofen, **dadurch gekennzeichnet, dass** ohne Entnahme des Gerüstes aus dem Keramikofen die Glasmasse während und/oder nach dem Sintern bevorzugt in einer im Keramikofen befindlichen Auftragsvorrichtung aufgeschmolzen wird und das flüssige Glas von der Auftragsvorrichtung auf das Gerüst aufgetragen wird.
